# EUROPEAN PATENT SPECIFICATION

(11) **EP 1 435 784 B1**
(45) Date of publication and mention of the grant of the patent: **12.04.2006**
(21) Application number: 01974531.4
(22) Date of filing: 16.10.2001
(51) Int. Cl.: A01N 43/80, A01N 25/04

(54) **STABLE AQUEOUS DISPERSION OF 1,2-BENZISOTHIAZOLINE-3-ONE (BIT)**
STABILE WÄSSRIGE DISPERSIONEN VON 1,2-BENZOISOTHIAZOLIN-3-ON (BIT)
DISPERSION AQUEUSE STABLE DE 1,2-BENZISOTHIAZOLINE-3-ONE (BIT)

(43) Date of publication of application: 14.07.2004
(73) Proprietor: Prom Limited, Caterham CR3 5UH (GB)
(72) Inventor: BERG, Carsten, DK-4791 Borre (DK); PALMER, Kenneth, Francis, Godstone RH9 8DX (GB)
(74) Representative: Gambell, Derek
(86) International application number: PCT/GB2001/004587
(87) International publication number: WO 2003/032730

(56) References cited:
- EP-A- 0 393 948
- WO-A-94/16564
- WO-A-95/00019
- WO-A-99/20698

## Description

### Technical field of invention

The invention relates to a process for preparation of a stable aqueous dispersion of 1,2-benzisothiazolin-3-one, Formula 1, without use of organic solvent.

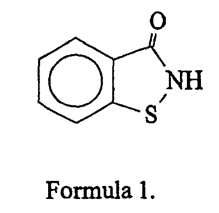

### Background of the invention

1,2-benzisothiazolin-3-one, hereinafter referred to as BIT, is a well established industrial biocide and is particularly effective in protecting aqueous media against microbiological spoilage. For that reason BIT is used as a preservative in water based latex and paint emulsions.

As BIT can cause sensitisation, handling is facilitated by preparing liquid formulations. Because BIT is sparingly soluble in water, formulations have been achieved by making solutions of alkali metal salts, as disclosed in WO 9416564 and EP 0231491, or of amine salts, as disclosed in GB 1330531. To increase stability of the solutions, glycols are used as solvents together with water. In this way, a practical BIT concentration of 20% has been achieved. Because of its low aqueous solubility, BIT has been formulated as dispersions. Such dispersions satisfy the increasing demand for formulations containing a low concentration of volatile organic compounds, VOC. An example is disclosed in WO 9500019, where a 20% dispersion of BIT, bead-milled to 5 micron, is obtained. To prevent sedimentation Xanthan Gum, a polysaccharide thickener, is used for the formulation giving a gelatinous texture with a viscosity of 3100 centipoise (cps).

### Disclosure of invention

The objects of this invention are to provide: a high-concentration dispersion of BIT without using organic solvents and a pourable liquid with low viscosity.

Experiments with high-density water solutions revealed that formate brines could solve the problem of BIT sedimentation. Surprisingly it turned out that a 45% BIT dispersion could be achieved using a 75% potassium formate solution (brine) with a density of SG(20°C) 1.578 as solvent. The brine is used in oilfield drilling and is commercially available from Hydro Gas & Chemicals Ltd. It was found that, if the potassium formate brine in the final dispersion was adjusted to a specific gravity (20°C) of 1.488, a 45% BIT dispersion which was stable for at least 5 months at 20°C could be obtained, and the resulting dispersion did not crystallise at -10°C. pH was found to be in the region of 7 to 7.5 at 10 times dilution. To improve the rheological properties of the dispersion, it was homogenised, adding 0.5 to 2% sodium lignin sulphonate as dispersant, and processed in a rotor-stator mixer (Ultra-Turrax) to an average particle size of about 10 micron. To expel air attached to the particles, the dispersion was degassed under vacuum. The dispersion exhibited a viscosity at 20°C of 1400 cps as measured by Brookfield viscometer with Spindle No. 2 and rotation speed of 12 rpm.

As BIT has a sensitising effect, it is produced with a certain amount of humidity to avoid dust formation during handling. To get the proper density, the BIT water content has to be taken into account when preparing the dispersion. This can achieved by using dry BIT as starting material, and adding the calculated amount of water to the dispersion in 75% potassium formate. Because handling dried BIT is not desirable, a more convenient way is to adjust the BIT water content to or below the amount needed to obtain the desired specific gravity. If BIT contains more water than desirable, the density of the dispersion can be adjusted by adding solid potassium formate.

The present invention provides a stable aqueous formulation comprising from 10 to 50% by weight of the microbiologically active agent BIT, preferably 45%, and from 0.1 to 2% dispersant, preferably 0.5 to 1% by weight. For adjusting gravity, a metal salt of a lower organic acid with a total number of carbon atoms from 1 to 5, in the amount of 25 to 50% by weight, preferably 34 to 38% as potassium formate, is added. The remainder of the aqueous formulation is water but may comprise other materials such as hydroxylic organic solvents. The formulation is, however, preferably free from organic solvents.

### Examples

### Example 1

BIT, with water content 15%, 529 g, is gradually added to a beaker equipped with a homogeniser, IKA, Ultra Turrax t25, tool S25N-25F, and containing potassium formate brine, 75% strength, 381 g, solid potassium formate, 79.4 g, and sodium lignin sulphonate, 10.0 g. During introduction of BIT the mixture is homogenised at 19,000 rpm at a max. temperature of 30°C to a mean-particle size about 10 micron.

The dispersion is degassed in vacuum, 10 mmHg, 20°C. The formulation obtained contains by weight 45% BIT, pH is in the range of 7 to 7.5 at 10 times dilution, and shows no separation for at least 5 months at 20°, and no solvent crystallisation at -10°C.

Viscosity is estimated by Brookfield viscometer with spindle no. 2 and rotation speed of 12 rpm, to 1400 cps at 20°C. The specific gravity of the dispersion is SG(20°C) 1.487. Filtration of the dispersion reveals a specific gravity SG(20°C) 1.489 of the filtrate.

### Example 2

A formulation was prepared according to Example 1, with starting materials, BIT, with water content 10%, 500 g; potassium formate brine, 75% strength, 495 g; and sodium lignin sulphonate, 5.0 g, giving a formulation containing by weight 45% BIT. The physical properties and stability were as described in Example 1.

### Example 3

A formulation was prepared according to Example 1, with starting materials, BIT, dried, 450 g; potassium formate brine, 75% strength, 495 g; water, 50 g; sodium lignin sulphonate, 5.0 g, giving a formulation containing by weight 45% BIT. The physical properties and stability were as described in Example 1.

## Claims

1. A stable aqueous biocide formulation comprising from 10 to 50% by weight of a microbiologically active agent containing at least 50% BIT, from 0.1 to 2.0% dispersant, and from 25 to 50% of a metal salt of a lower organic acid with a total number of carbon atoms from 1 to 5.

2. A formulation as claimed in claim 1 wherein the remainder of the formulation is water.

3. A formulation as claimed in claims 1 and 2 which contains BIT as the sole microbiological agent.

4. A formulation as claimed in any one of claims 1 to 3 wherein the lower organic acid is formic acid.

5. A formulation as claimed in any one of claims 1 to 4 wherein the metal salt of a lower organic acid is potassium formate.

6. A formulation as claimed in any one of claims 1 to 5 which has a viscosity between 800 and 3000 centipoise.

7. A formulation as claimed in claim 1 which comprises by weight about 20% BIT, about 1% dispersant and about 54% potassium formate.

8. A formulation as claimed in claim 1 which comprises by weight about 45% BIT, about 1% dispersant and about 37% potassium formate.

## Patentansprüche

1. Stabiler wäßriger Riozidansatz, mit 10 bis 50 Gew.-% eines mikrobiologisch wirksamen Agens, das zumindest 50% BIT, 0,1 bis 2% Dispergiermittel und 25 bis 50% eines Metallsalzes einer schwachen organischen Säure mit einer Gesamtzahl von Kohlenstoffatomen von 1 bis 5 enthält.

2. Ansatz nach Anspruch 1, bei dem der Rest des Ansatzes Wasser ist.

3. Ansatz nach den Ansprüchen 1 und 2, der BIT als das einzige mikrobiologische Agens enthält.

4. Ansatz nach einem der Ansprüche 1 bis 3, bei dem die schwache organische Säure Ameisensäure ist.

5. Ansatz nach einem der Ansprüche 1 bis 4, bei dem das Metallsatz einer schwachen organischen Säure Kaliumformiat ist.

6. Ansatz nach einem der Ansprüche 1 bis 5, der eine Viskosität von 800 bis 3000 Centipoise aufweist.

7. Ansatz nach Anspruch 1, der etwa 20 Gew.-% BIT, etwa 1 Gew.-% Dispergiermittel und etwa 54 Gew.-% Kaliumformiat enthält.

8. Ansatz nach Anspruch 1, der etwa 45 Gew.-% BIT, etwa 1 Gew.-% Dispergiermittel und etwa 37 Gew.-% Kaliumformiat enthält.

## Revendications

1. Une formulation biocide aqueuse stable comprenant de 10 à 50 % en poids d'un agent actif microbiologique comprenant au moins 50 % de BIT, de 0,1 à 2,0 % de dispersant, et de 25 à 50 % d'un sel métallique d'un acide organique inférieur avec un nombre total de carbones de 1 à 5.

2. Une formulation selon la revendication 1 dans laquelle le reste de la formulation est l'eau.

3. Une formulation selon les revendications 1 et 2 qui contient le BIT en tant que seul agent microbiologique.

4. Une formulation selon l'une quelconque des revendications 1 à 3 dans laquelle l'acide organique inférieur est l'acide formique.

5. Une formulation selon l'une quelconque des revendications 1 à 4 dans laquelle le sel métallique de l'acide organique inférieur est le formate de potassium.

6. Une formulation selon l'une quelconque des revendications 1 à 5 qui a une viscosité comprise entre 800 et 3000 centipoises.

7. Une formulation selon la revendication 1 qui comprend, en poids, environ 20 % de BIT, environ 1 % de dispersant et environ 54 % de formate de potassium.

8. Une formulation selon la revendication 1 qui comprend en poids environ 45 % de BIT, environ 1 % de dispersant et environ 37 % de formate de potassium.
